Europäisches Patentamt

European Patent Office

Office européen des brevets

(19)

(11) Publication number: **0 198 623**
A2

# EUROPEAN PATENT APPLICATION

(12)

(21) Application number: 86302320.6

(22) Date of filing: 27.03.86

(51) Int. Cl.⁴: **B 23 P 15/00,** F 16 D 55/14

(30) Priority: 03.04.85 GB 8508738

(43) Date of publication of application: 22.10.86
**Bulletin 86/43**

(84) Designated Contracting States: **DE FR GB IT**

(71) Applicant: **LUCAS INDUSTRIES public limited company,
Great King Street, Birmingham, B19 2XF West Midlands
(GB)**

(72) Inventor: **Price, Anthony George, 14 Meadow Lane
Croesyceiliog, Cwmbran Gwent NP44 2EY Wales (GB)**
Inventor: **Campbell, Roy, The Corner House 1 Maribrook
Lane, Licky Rock Bromsgrove Worcestershire (GB)**
Inventor: **Basnett, Michael Neil, 22 Pencommin,
Llangynidr Powys Wales (GB)**

(74) Representative: **Spall, Christopher John et al, BARKER,
BRETTELL & DUNCAN 138 Hagley Road, Edgbaston
Birmingham B16 9PW (GB)**

(54) Improvements in self-energising disc brakes.

(57)     A pressure plate for a disc brake of the spreading type comprisies a metal casting (1) in which a pilot recess (2) is cast integrally to receive the inner end (4) of a cutter (3) which is then manipulated to machine the recess for recovering a ball (8). The recess (2) may be surrounded by an integrally cast relief (10) and the recess (2) may be of any convenient profile.

1

## IMPROVEMENTS IN SELF-ENERGISING DISC BRAKES

This invention relates to self-energising spreading type disc brakes of the kind in which rotatable friction discs provided with linings of friction material are adapted to be brought into engagement with spaced opposed braking surfaces in a housing by pressure plates located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged, in turn, into engagement with the braking surfaces, the pressure plates being carried round with the friction discs until one is arrested by the engagement of a lug on the plate with a drag-taking stop abutment in the housing, and the continued angular movement of the other pressure plate providing a servo action. In particular this invention is concerned with improvements in the manufacture of a pressure plate for use in a disc brake of the kind set forth.

Self-energising brakes of the kind set forth may be dry or they may be of the liquid cooled type, and such brakes are commonly used in tractors and like vehicles and are hereinafter called brakes of the kind set forth.

In the manufacture of pressure plates for disc brakes of the kind set forth the recesses which constitute the ramps may be machined on special purpose

2

machines in which the cutters for machining the recesses incorporate a drill point profile blending with the desired cutter spherical radius. In such a process it is necessary first to drill a pilot hole in the plate prior to the use of the cutter to enlarge and advance in the hole for the purpose subsequently of forming a recess to generate the ramp. Specifically the cutter is plunged into the material of the plate at the deeper end of the recess and ramp generation accompanies withdrawal of the cutter.

According to our invention a pressure plate for a disc brake of the kind set forth comprises a metal casting in which a pilot recess is cast integrally, and a ramp is produced by the use of a cutter which is received in the pilot recess and is moved simultaneously inwardly and laterally to generate the ramp.

The cutter also moves arcuately along the arc of a circle as the cutter is either withdrawn from the plate or is moved further into the metal.

Normally more than one pilot recess will be cast integrally in the pressure plate, and a corresponding number of cutters, moving in unison, will be provided to generate a corresponding number of ramps.

Providing the integrally cast pilot recess or recesses facilitates manufacture and conserves expense since the previously required drilling operation is eliminated.

The pilot recess may take any convenient form. In one construction the pilot recess may be of concave outline to receive the cutting end of a rotatable

3

cutter which is of complementary outline. In other constructions the pilot recess may be deeper with a flat base and straight or otherwise inwardly divergent or truncated sides. When a pilot recess is deeper, a correspondingly deeper recess can be machined in the plate. This is of particular advantage in constructions in which balls received in complementary pairs of recesses in a pair of pressure plates act as pilots to carry one pressure plate from the other.

In addition a relief may also be cast integrally in the plate surrounding the pilot recess. Such a relief minimises the length of ramp necessary for a given diameter of ball and lining wear situation. In such a construction the ramp is extended beyond the point of maximum wear to ensure that maximum stress concentrations do not cause an unnacceptable brinelling of the parts.

The cast relief may be formed as an annular ring or as isolated areas in association with the respective recesses.

Some embodiments of our invention are illustrated in the accompanying drawings in which:-

Figure 1 is a section through a pressure plate as cast;

Figure 2 is a plan of the plate containing a recess;

Figure 3 is a section on the line 3-3 of Figure 2;

Figure 4 is a section on the line 4-4 of Figure 3;

Figure 5 is an assembly of two pressure plates, each similar to the pressure plate of Figures 2-4;

Figure 6 is a section similar to Figure 5 but with reliefs surrounding the recesses;

Figure 7 is a section similar to Figure 1 but showing a pilot recess of different outline;

Figure 8 is a plan of the plate containing a recess developed from the pilot recess of Figure 7;

Figure 9 is a section on the line 9-9 of Figure 8;

Figure 10 is a section on the line 10-10 of Figure 9;

Figure 11 is an assembly of two pressure plates, each similar to the pressure plate of Figures 9-10;

Figure 12 is a section through another pressure plate having different cast and machined profiles;

Figure 13 is a section similar to Figure 12 but showing a modification;

5

Figure 14 is a plan of another pressure plate; and

Figure 15 is a section on the line 15-15 of Figure 14.

A brake of the spreading type comprises a pair of rotatable friction discs provided on opposite sides with linings of friction material which are adapted to be brought into engagement with spaced opposed radial surfaces in a housing by pressure plates located between the discs and centred by three angularly spaced stationary pilots. Different constructions of the pressure plates are illustrated in the accompanying drawings. Balls or rollers are located in co-operating angularly spaced oppositely inclined recesses in adjacent faces of the pressure plates.

The application of the brake is initiated by moving the pressure plates angularly in opposite directions which causes the pressure plates to move axially relatively away from each other due to the tendency for the balls or rollers to ride up ramps defined by the end faces of the recesses. This urges the friction discs into engagement with the faces in the housing. The pressure plates are then carried round with the discs until one is arrested by the engagement of a lug on a respective plate with a drag-taking abutment, whereafter continued angular movement of the other plate provides a servo action.

The brake is applied mechanically for parking or in an emergency by a pull-rod (not shown) which extends through a radial opening in the housing and is coupled to the outer ends of a pair of toggle links of which the inner ends are pivotally connected to respective pressure plates.

For normal service braking the brake may be applied hydraulically by an hydraulic actuator which acts between lugs on the respective pressure plates. The lugs are displaced angularly from the toggle links.

As illustrated in the drawings, each pressure plate comprises a metal casting of generally annular outline in which is integrally cast pilot recesses of which only one is illustrated at 2, and from which the final profile of the ball receiving recess and the ramp is generated.

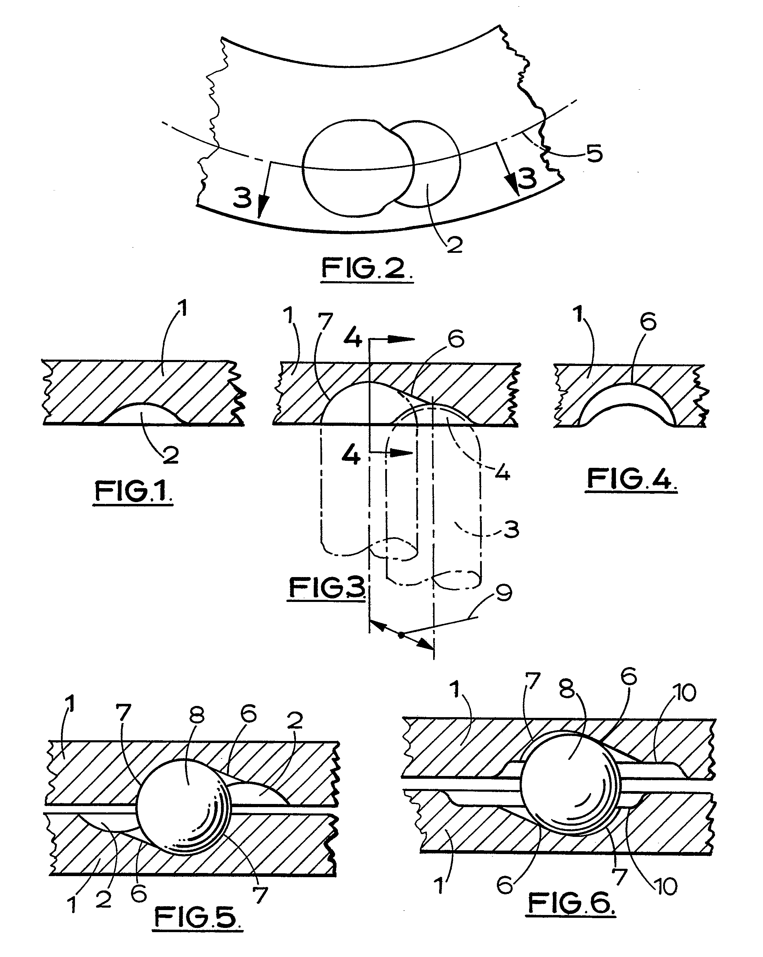

The pilot recess 2 of the plate 1 shown in Figure 1 is concave in outline.

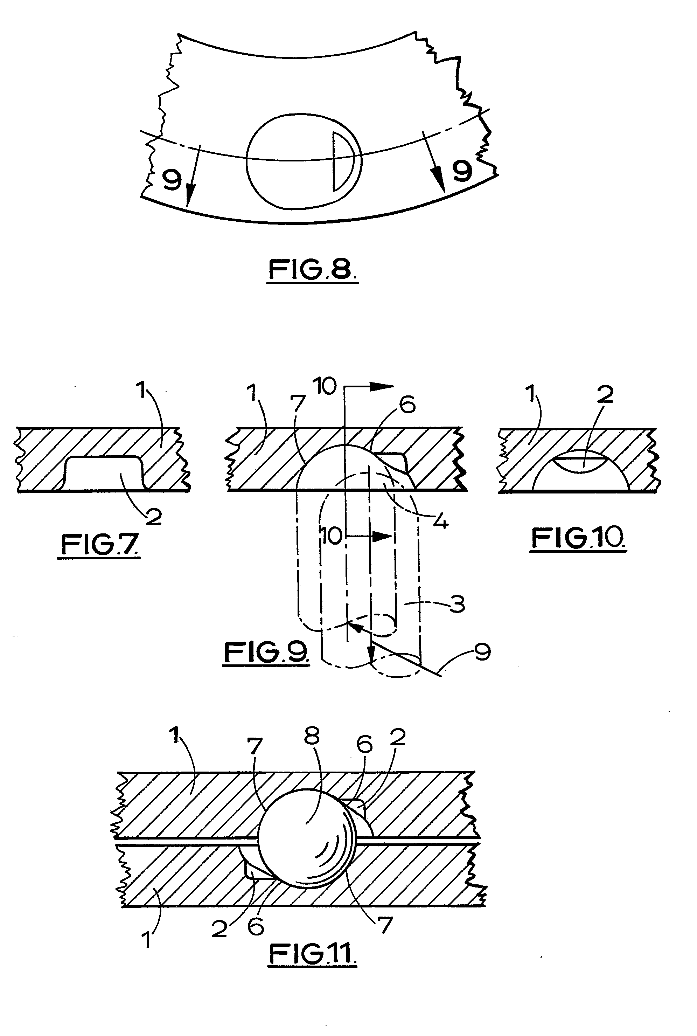

As illustrated in Figures 2 to 5 a cutting face 4 of part-spherical outline at the outer end of a cutter 3 is inserted into the pilot recess 2 in a direction generally normal to the plane of the plate 1. The cutter 3 is then moved inwardly and laterally as shown by arrow 9, whilst traversing a pitch circle 5 on which all the recesses lie, in order to generate a ramp 6. The cutter is then withdrawn from the plate 1. The curved surface 7 at the deeper end of the final recess defines a stop for a ball 8 in an inoperative position of brake as shown in the assembly of Figure 8 in which two similar pressure plates 1 are superimposed upon each other with balls located in the recesses 2 of complementary pairs to form an actuator unit in the assembled brake.

7

The cutter travel indicated is that at lower speed for metal removal.

A high sided wall is retained along each final recess to ensure effective piloting of the balls 8 of one plate 1 with respect to the other.

In the modified construction illustrated in Figure 6 a relief 10 surrounding the pilot recess 2 in each plate 1 is cast integrally with the respective plate. The relief minimises the length of the ramp 6 necessary for a ball 8 of a given diameter and lining wear situation.

In the pressure plate illustrated in the embodiment of Figures 7 to 11 the pilot recess 2 cast integrally is high sided and of substantial axial depth to facilitate piloting of one pressure plate relative to the other. In addition, a recess 2 of this profile enables metal to be removed rapidly.

Tool run-out due to mismatch is not a problem since the cutter 3 is rigid and cast iron is ideal for cutting in this manner.

The method of construction is otherwise the same as that of Figures 1 to 5 and corresponding reference numerals have been applied to corresponding parts.

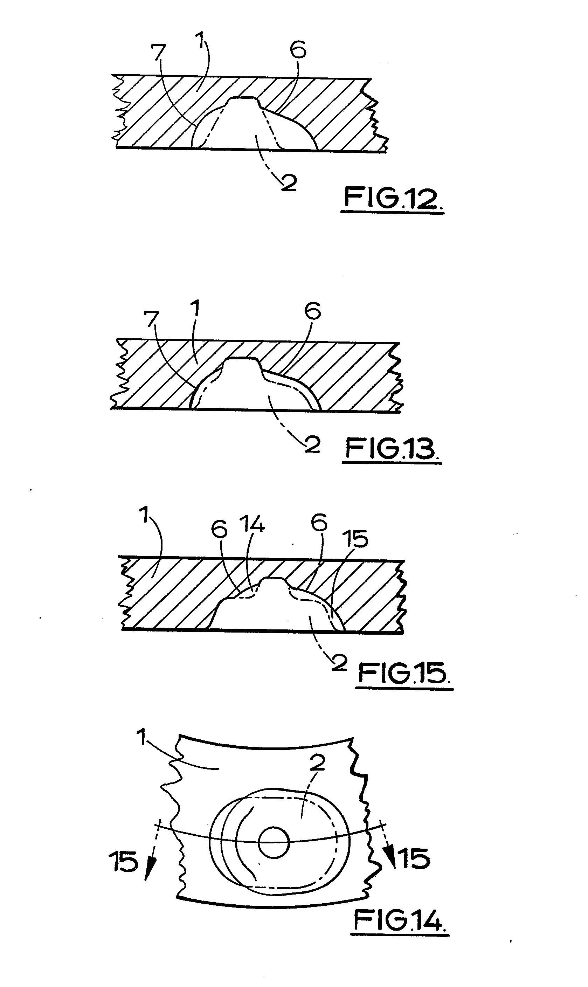

In the construction of Figure 12 the integrally cast pilot recess 2 is of frusto-conical outline, the profile of which is shown in chain-dotted line. The recess 2 is located at the deeper end of the final recess.

Similarly in the construction of Figure 13 the integrally cast pilot recess 2 is enlarged circumferentially so that a relatively smaller amount of metal is moved by the cutter in machining the recess to the final profile shown in full lines.

In the construction of Figures 14 and 15 the cast pilot recess 2 is similar in profile to that of Figure 13 but the edges of the recess 2 are steeper and correspond more closely to the profile of the final recess. As illustrated, this means that only the shaded regions 14 and 15 have to be machined away to produce the final profile.

9

CLAIMS

1. A method of producing a pressure plate for a disc brake of the spreading type, the pressure plate having a ball or roller engaging ramp, characterised by taking a metal casting of generally annular outline in which a pilot recess (2) is cast integrally, and producing the ramp by the use of a cutter (3) which is inserted into the pilot recess and is moved simultaneously, both inwardly and laterally to generate the ramp (6).

2. A method according to claim 1, characterised in that the cutter (3) is also moved arcuately along the arc of a circle as the cutter is either withdrawn from the plate or moved further into the metal.

3. A method according to claim 1 or claim 2 characterised in that more than one recess (2) is cast integrally in the casting, and a corresponding number of cutters (3), moving in unison, are provided to generate a corresponding number of ramps.

4. A pressure plate constructed by the method of any of claims 1 to 3, characterised in that pilot recess (2) is of concave outline to receive the cutting end (4) of a rotatable cutter (3) which is of complementary outline.

5. A pressure plate constructed by the method of any of claims 1 to 3, characterised in that the pilot recess (2) is of frusto-conical outline.

6. A pressure plate according to claim 4 or claim 5, characterised in that the pilot recess (2) has an integrally cast relief (10).

0198623

10

7. A pressure plate according to claim 5 or claim 6, characterised in that in that pilot recess (5) is high-sided.

FIG.2.

FIG.1.

FIG3

FIG.4.

FIG.5.

FIG.6.

FIG.8.

FIG.7.

FIG.9.

FIG.10.

FIG.11.

FIG.12.

FIG.13.

FIG.15.

FIG.14.